# EUROPEAN PATENT APPLICATION

(11) **EP 2 816 271 A1**
(43) Date of publication of application: **24.12.2014**
(21) Application number: 13382231.2
(22) Date of filing: 20.06.2013
(51) Int. Cl.: F16L 19/065, F16L 21/04, F16L 23/028, F16L 23/032, F16L 25/00, F16L 25/14, F16L 19/08

(54) **Device for joining two tubes**

(71) Applicant: Ruiz Saura, Fernando, 30100 Senda Granada De Levante (Murcia) (ES)
(72) Inventor: Ruiz Saura, Fernando, 30100 Senda Granada De Levante (Murcia) (ES)
(74) Representative: Gonzalez-Alberto Rodriguez, Natalia

(57) **Abstract**

Device for joining two pipes, as a mechanical anti-traction join for neutralising the axial movements produced between said pipes, wherein it comprises: two internal rings or flanges (4), each one having an external face and an internal face, the internal faces of each one of the rings or flanges facing,- two external rings or flanges (3), each one having an external face and an internal face, the internal face of each external ring or flange facing the external face of one of the internal rings or flanges (4), each internal ring or flange (4) forming a pair with an external ring or flange (3), thereby forming a pair of rings or flanges (3, 4) which are separated from one another, each pair of flanges (3, 4) holding one end of each pipe,- a plurality of bars (5) arranged on the perimeter of the external rings or flanges (3) and the internal rings or flanges (4), which keep the distance between the internal rings or flanges (4) constant, also serving to fasten the external rings or flanges (3) so that they are separated from the internal rings or flanges (4), joining all the rings (3, 4) together and,- an ensemble of anti-traction segments (6) joined to the external face of the internal rings or flanges via means (10) which facilitate the displacement thereof in relation to the inner rings or flanges (4), at least one lower surface of said segments (6) being in contact with the pipes and one surface being in contact with the external rings or flanges (3).

## Description

### OBJECT OF THE INVENTION

The present invention, a device for joining two pipes, refers to a mechanical anti-traction device for joining pipes, made of the same or a different material, which are equal or different in terms of external diameter, designed to neutralise the axial movements produced in the pipes, being independent of the sealing system used between these pipes, thus resulting in long-lasting joins and preventing fluid leaks and environmental contamination.

The present invention may be applied within the field of the industrial sector dedicated to manufacturing construction accessories, focussing specifically on the domain of apparatus and devices for joining pipes.

### BACKGROUND OF THE INVENTION

Systems for joining pipes currently exist, which are not resistant to the axial movements of the pipes. The most current examples of this type of connection are by means of bell joins, couplings, clamps or any other non-flanged systems. Nevertheless, systems for joining two pipes also exist which have external diameters of up to 400 mm and do resist said axial movements between the pipes. However, the known joining systems do not support the pressure generated with diameters greater than those cited, thus causing the ends of the joined pipes to separate. Said axial movements are mainly generated by the pipe system's internal positive hydraulic pressure, by dilations and contractions of thermal cycles in the pipes (a very acute problem in polyethylene and other thermoplastics), by being hit by a hydraulic ram, by earth sedimentation or ends of line, amongst other causes.

Likewise, the demands of the industrial, alimentary, city water services and irrigation sectors for pipe joints are also known, these sectors considering it desirable for the joints to have an effective fixation system for pipes with various diameters, pressures and materials, which is capable of counteracting the axial forces produced in pipes generating instability in the joints and system failure, mainly in nominal pipe diameters of over 400 mm. The aim of the present invention is therefore to meet said demand and develop an alternative system for joining pipes, which facilitates a guaranteed join between pipes, not only in diameters of up to 400 mm but also, especially in those joins between pipes with external diameters over 400 m and particularly of up to 2,000 mm.

Therefore, in the state of the art, solutions are known for joining small diameters as well as for joining pipes of the same size, as already mentioned. However, no joining systems which also make it possible to join nominal diameters of over 400 mm are known, which make it possible to join pipes with different diameters together, if and even when they are made of different materials. Currently, the process for joining pipes with diameters of over 400 mm begins by welding the ends to be joined, although this solution is limited by the pipe material, since there are some materials which it is not possible to weld. The main problem arises when it comes to repairing or replacing pipes in old networks, which are usually made of steel or concrete, with PVC, polyethylene and polyester pipes, which are currently the most commonly used despite joining them to old pipes being very complicated.

Likewise, the axial movements in the pipes cause the seal between the joins of various stretches of pipes to fail, thereby making it necessary to install limits, usually in civil engineering, thus constructing large foundations to secure the pipes to the ground or means. These measures are very costly and time consuming in terms of implementation.

The pipes made of materials which can be welded are usually made of "steel - steel" or "plastic - plastic" and, as already mentioned, in addition to the problem set out above, relating to it being impossible to weld pipes made of different materials together, an additional problem arises when it comes to installing pipes made of materials which may be welded in an ATEX (explosive atmosphere) areas, where there is risk of explosion or in pipes carrying flammable fluids, etc. In such cases, welding and generating heat are strictly prohibited, which makes it difficult to join two pipe ends together. Similarly, in welded joins, the mechanical and electrical means required are seldom available, owing to the location where the join must be made, they are expensive or physical access cannot be obtained to make the join.

Thanks to its mechanical anti-traction system, the device object of the invention makes it possible to resolve any of the abovementioned situations quickly, cheaply and effectively.

Moreover, no solutions for joining pipes larger than 400 mm in pipes made of different materials are known in the state of the art, for example for joining metal pipes (steel, cast iron, copper, iron and lead, etc.), plastic pipes (polyethylene, polypropylene, PVDF, PVC, etc.,) fibre cement pipes, concrete pipes, glass-reinforced plastic (GRP or Fiberglass) or ceramic pipes, whilst the present invention facilitates the joining together of pipes made of the same or different materials.

Henceforth, the present invention proposes a polyvalent system for joining two pipes. In other words, it proposes an anti-traction system, which facilitates the joining of pipes which are different from one another, both in terms of material and in terms of diameter, which can be used alongside a sealing system, independent of the anti-traction joining system object of the present invention, also resisting being hit by a ram.

### EXPLANATION OF THE INVENTION

The present invention, a device for joining two pipes, refers to an anti-traction device for installation on the exterior of two ends of two pipes.

The invention proposes a device for joining pipes, which is configured as an anti-traction device installed externally to the pipes, which links two ends of said pipes, which may be made of different materials and may even differ in terms of external diameter (being able to tolerate a difference of up to 15 mm between the external diameters of the pipe ends to be joined) and which complements any sealing system (bell, coupling, clamp, universal joint). The device is composed of various elements, all of which are preferably made of steel and with dimensions which comply with international codes in order to ensure that the system and its components are secure.

The object of the invention is thereby, according to claim 1, a device for joining two pipes, comprising:
- two internal rings or flanges, each of which has an external face and an internal face, the internal faces of each one of the rings or flanges facing each other,
- two external rings or flanges, each of which has an external face and an internal face, the internal face of each external ring or flange facing the external face of one of the internal rings or flanges, each internal ring or flange corresponding to an external ring or flange, thus forming a pair of rings or flanges which are separated from one another and each pair of flanges holding one end of each pipe,
- a plurality of bars arranged on the perimeter of the external and internal rings or flanges, which ensure a constant distance between the internal rings or flanges and also serve to fasten the external rings or flanges in such a way that they are separated from the internal rings or flanges, joining all the rings together and,
- a set of anti-traction segments, preferably in the form of a wedge, although a rectangular prism form is also possible, joined to the external face of the internal rings or flanges, via means which facilitate the displacement of the same in relation to said rings or flanges, at least one surface of said segments likewise being in contact with the pipes and one surface being in contact with the external rings or flanges.

The external and internal faces of the two external rings or flanges are preferably flat and parallel to one another, one of these external rings or flanges being located at each end of the device and each one being angled horizontally at between 10 ° to 20 °, preferably 15 °, on the internal surface of the internal diameter and comprising through holes on their faces to facilitate the installation of a plurality of threaded bars between both flanges, which as will later be shown, are arranged around the perimeter of pipes to be joined and form the device's tensioning elements. These external flanges are made of just one piece and are inserted into the pipes at the end to be joined thereof, being the device elements which resist the greatest, main forces to which the device is submitted.

Said angle of preferably 15 ° is calculated based on the desired tolerance between the external diameters of the pipes to be joined. For example, if the desired tolerance is 15 mm between the external diameters of the pipe or pipes to be joined, 15 ° inclination is required. These values fluctuate depending on the diameter and on the desired tolerance to be covered externally. In other words, if, rather than an inclination of 15 °, an inclination of 20 ° is used, the corresponding value in mm would be obtained. This value aims to increase or decrease the tolerance percentage.

The two internal rings or flanges, with their external and internal faces preferably being flat and parallel to one another, preferably have an opening system to facilitate the easy installation thereof, which is why the flange is separated into two semi-circular halves, both halves being joint at one end by means of a hinged type element, which makes it possible to open it and at the opposite end by fastening means, which keep the ring or flange closed whilst also facilitating its being mounted to the two ends of the pipes easily. The anti-traction segments are joined to these flanges, preferably on the external face thereof, via means which facilitate the displacement of the same in relation to the internal rings or flanges on the device, which shall be explained below. Just like the external flanges, the internal flanges have through holes to facilitate the installation of the threaded bars, which act as tensioning elements and keep the distance between the internal rings or flanges constant, said distance between the internal flanges being variable, depending on the diameter or the pipes to be joined. These flanges are not as thick as the external flanges and mainly serve as a mounting guide, given that they are not submitted to forces and mainly serve to support the rest of the components, namely the bars, external flanges and anti-traction segments.

The number of anti-traction segments depends on the external diameter of the pipes to be joined, these segments preferably being in wedge form, although they may also be in rectangular prism form, with one face, which will be in contact with the external surface of the pipes and which has teeth to transform the axial movements of the pipes into radial anti-traction force, thus rendering any separation between said pipes void. As already mentioned, the anti-traction segments are joined to the external face of the internal flanges by means which facilitate the displacement of the same, in relation to the internal flanges and are flexible elements, which may also be elastic and which are preferably omega or spring shaped. The anti-traction segments should be, at least, 45 Rockwell grades hard and preferably at least 55 Rockwell grades hard. The anti-traction segments should be harder than the material the piping is made of, cement, fibre cement and steel, striving to make it twice this strength so that the hardness of the segment material facilitates the anchoring onto the material the pipes are made of, without weakening or losing the adherence of the hold fixing the flange to the pipes.

This hardness is necessary so that when it grips the ensemble, the anti-traction segment remains stuck to the pipes, upon situating the same between the external surface of the pipes and the internal surface of the internal diameter of the external flange, which is at said angle of between 10 ° and 20 °, before the teeth are blunted, mainly in steel or fibre cement pipes. Likewise, the surface with the teeth is designed to adapt to the diameters of the pipes to be joined, for example being lightly curved. These segments also aim to prevent the internal flanges and external flanges from joining when the device is being mounted and run.

The angle of the internal diameter of the external flange will vary depending on whether the inclination of the anti-traction segment is in the form of a wedge or in the form of a rectangular prism.

The plurality of bars serving as tensioning devices are preferably threaded at their free ends, in order to facilitate their being joined by means of nuts and washers to the external rings or flanges. The number and size, in terms of both length and diameter of these bars, depends on the external diameter of the pipes to be joined and on the internal pressure thereof. Each bar preferably has two nuts and two washers at its ends. The respective ends of the diameter of the bars is furthermore lowered in order to limit the distance between the two internal flanges, leaving enough space to be able to fit the sealing system which, complementing the device object of the present invention, is incorporated in order to join the pipes. These bars join the external flanges and internal flanges together, thereby keeping the distance between the internal flanges, preventing the same from being joined together and likewise helping to resist the traction forces to which the device is submitted, alongside the external flanges and anti-traction segments.

In order to mount all these elements, the external flanges are introduced into the ends of the pipes to be joined. The preferred sealing system is then mounted (the invention device is complementary to but independent of the same) between the ends of the pipes. The structure formed by the internal flanges with the anti-traction segments and tensioning bars is subsequently mounted around the pipes and onto the sealing system. Finally, the internal flanges are closed, when they have articulation means to facilitate their opening and the external flanges are screwed to the ends of the previous structure. A rapid installation mechanical grip may be used to mount the device, without using auxiliary machinery, given that one or two operators with a spanner is enough to install it.

During the mounting process, the anti-traction segments move just as the external flange moves when tightened, until said segments adjust to the diameter of the pipes, becoming stuck to the external surface of said pipes.

The device object of the present invention makes it possible to join all kinds of pipes, regardless of the material they are made of and whether or not this material is susceptible to being welded. It is especially designed for application in the joining of pipes made of material which cannot be welded together, for example cement-cement, cement-plastic, cement-GRP, cement-steel, steel-GRP, steel-plastic and plastic-GRP.

The most noteworthy technical and commercial characteristics fostered by the present invention are:
- that it makes the pipe connections more reliable, which in turn is beneficial to the environment because leaks and contamination are also reduced,
- that it does not require auxiliary machinery for its installation,
- that it can be installed quickly and easily,
- that it is valid for any type of piping and material,
- that it has a tolerance range of 15 mm external diameter,
- that it is valid for any diameter, particularly of up to 2000 mm,
- that it is valid for any pressure, for example being valid for a pressure ranging from 16 up to 25 bars in diameters of 630 mm and for a pressure ranging from 10 up to 15 bars in diameters of 1000 mm
- that it is a universal, versatile anti-traction system which is easy to install with short mounting times and low material investment costs and,
- that it eliminates costs associated with the auxiliary machinery of the anchoring systems and the joining systems currently on the market.

### DESCRIPTION OF THE DRAWINGS

In order to complement the current description of the device, object of the present invention and to facilitate a better understanding thereof, the present descriptive specification is accompanied by a set of figures which serve as a non-limiting representation of the invention.

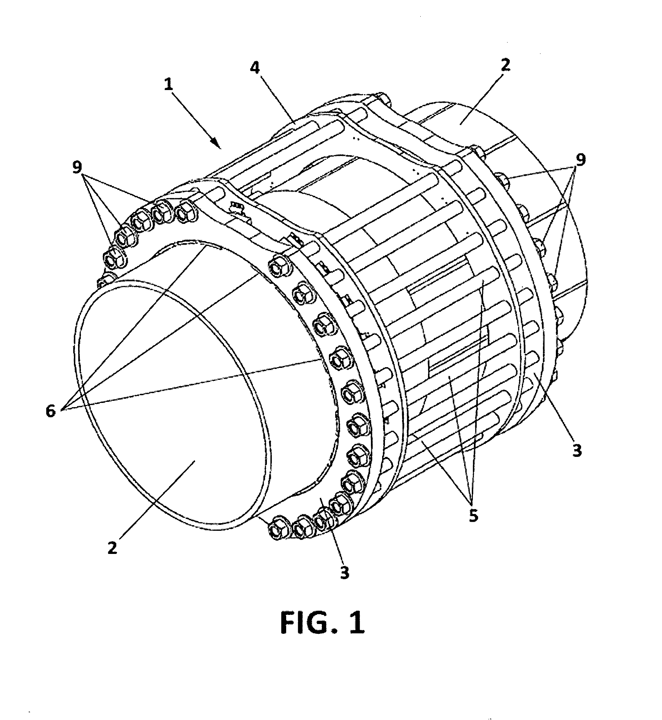

Figure 1 is a perspective view of an example embodiment of the device for joining pipes, object of the invention, represented after having been mounted to the pipes, this view illustrating the main parts and elements comprising the invention as well as its formation and arrangement.

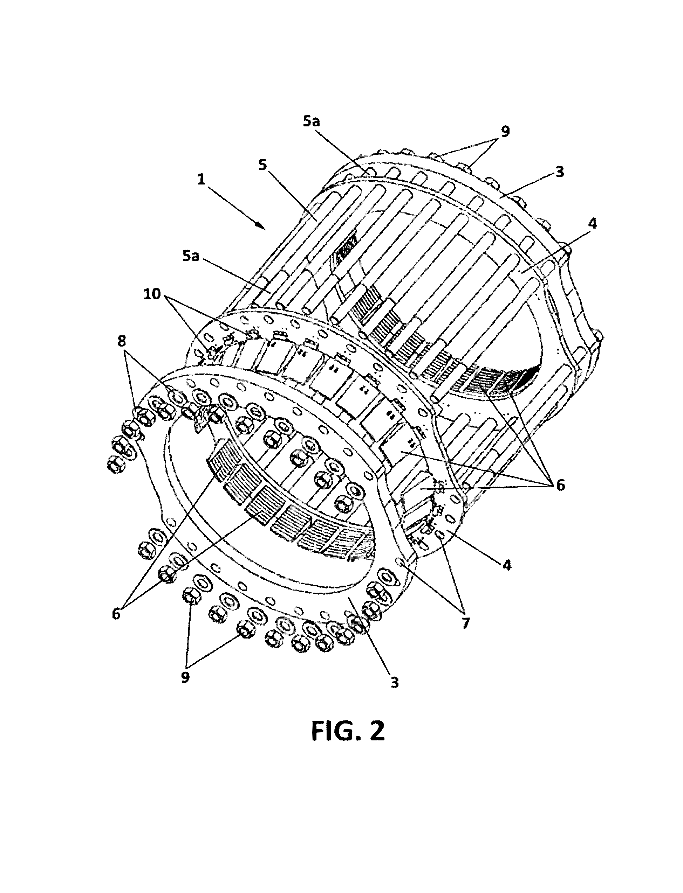

Figure 2 is a perspective view representing the same example of the device for joining pipes, according to the invention, shown in the previous figure, in this case shown without the pipes being coupled and being partially taken apart.

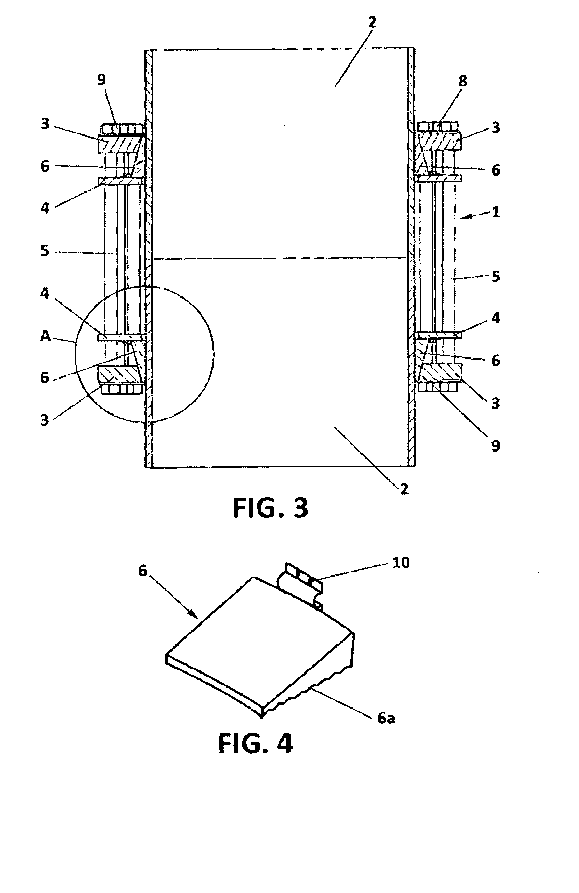

Figure 3 is a longitudinal cross section of the device, object of the invention and of the pipes it joins.
Figure 4 is a perspective view of one of the anti-traction segments incorporated into the device, represented alongside the flexible joining element with which the flange is attached.
Figure 5 is an amplified representation of detail A, shown in figure 3, representing the formation and arrangement of the anti-traction segments between the external and internal flanges.
Figure 6 is a further perspective view of a portion of the device pertaining to the area in which the anti-traction segments are located.

### PREFERRED EMBODIMENT OF THE INVENTION

In view of the figures, below an example of the preferred, non-limiting embodiment of the device for joining pipes, object of the invention, is described.

As can be seen in said figures, the device (1) in question, used to join two pipes (2) together, which may be made of the same or different material and may differ in terms of diameter with a difference of up to 15 mm, is installed as a complementary joining system on a conventional sealing system and comprises two external rings or flanges (3) and two internal rings or flanges (4), located at each end of the device, each pair holding the end of each pipe (2) and being joined together by means of a plurality of bars (5) which act as tensioning elements in order to fix the distance between both pairs of flanges, an ensemble of anti-traction segments (6) also being present which are incorporated at both ends of the device, between said pairs of flanges, formed by wedge pieces which are in contact with the surface of the pipes (2) and adjusting to them upon being pressured by the external flanges (3) being screwed.

The smaller diameters of both the external and internal flanges are slightly bigger than the external diameters of the pipes to be joined.

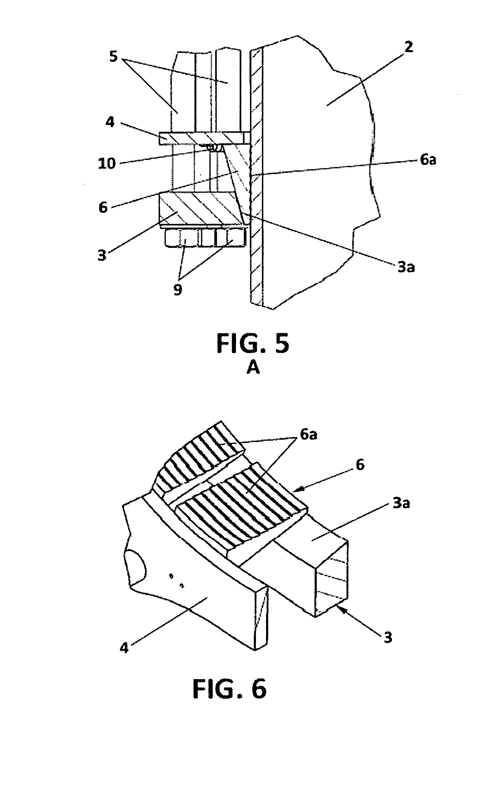

The external flanges (3) are a circular body made of just one piece with flat faces, an external face and an internal face as well as an internal surface (3a), in the smaller diameter of the ring, which has an angle of preferably 15 ° in order to be adjusted to the wedge form of the anti-traction segments (6) as can be clearly seen in the detail in figure 5.

Each one of the external flanges (3) and internal flanges (4) have external and internal surfaces or faces, which are preferably parallel to one another, in such a way that the external faces of the internal flanges face the internal surfaces of the external flanges, one external flange forming a pair with one internal flange. Said flanges have a plurality of through holes (7) to facilitate the installation of the bars (5), these bars having threaded ends in order to be attached to the external flanges by means of washers (8) and nuts (9).

The bars (5) which are arranged surrounding the perimeter of the pipes also have a lowered diameter (5a) at their respective ends in order to limit the distance between the two internal flanges, leaving enough space to fit the sealing system.

The internal flanges (4) may optionally be opened and divided into two halves joined together by means of articulation, for example by means of hinge or something similar, in order to facilitate mounting. Said internal flanges (4), given that they serve as a support and guide, do not support significant forces when the device is mounted and are preferably thinner, perhaps even made of a lighter material, than the external flanges (3).

The anti-traction segments (6), the number of which varies depending on the external diameter of the pipes to be joined, are, as already mentioned, in wedge form and the face in contact with the pipes (2) has a toothed surface (6a) which is preferably slightly curved in order to better adapt to the external curvature of the piping. These segments (6) are robust pieces which have a Rockwell hardness grade of at least 45, preferably of at least 55 and are joint to the external dace of the internal flanges (4) via means which facilitate the displacement (10) thereof (6) in relation to the internal rings or flanges (4), for example flexible elements (10) in the shape of a spring or the Greek letter omega.

## Claims

1. Device for joining two pipes (2), as a mechanical anti-traction join for neutralising the axial movements produced between said pipes, independently of the sealing system employed between said pipes, it being possible for said pipes to be made of different materials, **characterized in that** it comprises:
- two internal rings or flanges (4), each one having an external face and an internal face, the internal faces of each one of the rings or flanges facing,
- two external rings or flanges (3), each one having an external face and an internal face, the internal face of each external ring or flange facing the external face of one of the internal rings or flanges (4), each internal ring or flange (4) forming a pair with an external ring or flange (3), thereby forming a pair of rings or flanges (3, 4) which are separated from one another, each pair of flanges (3, 4) holding one end of each pipe,
- a plurality of bars (5) arranged on the perimeter of the external rings or flanges (3) and the internal rings or flanges (4), which keep the distance between the internal rings or flanges (4) constant, also serving to fasten the external rings or flanges (3) so that they are separated from the internal rings or flanges (4), joining all the rings (3, 4) together and,
- an ensemble of anti-traction segments (6) joined to the external face of the internal rings or flanges via means which facilitate the displacement (10) thereof (6) in relation to the inner rings or flanges (4), at least one lower surface of said segments (6) being in contact with the pipes and one surface being in contact with the external rings or flanges (3).

2. Device, according to claim 1, **characterized in that** the external rings or flanges (3) are made of just one piece, having an internal surface (3a), the internal diameter of the ring being determined by an angle in order to be adjusted to the form of the anti-traction segments (6).

3. Device, according to claim 1 or 2 **characterized in that** the external flanges (3) and the internal flanges (4) have a plurality of through holes (7) to facilitate the installation of the bars (5).

4. Device, according to the previous claims, **characterized in that** the ends of the bars are threaded in order to be attached to the external flanges by means of washers (8) and nuts (9).

5. Device, according to any of the previous claims, **characterized in that** the bars (5) have a lowered diameter (5a) on their respective ends in order to limit the distance between the two internal flanges (4).

6. Device, according to any of the previous claims, **characterized in that** the internal flanges (4) may be formed by two semi-circular halves, joined together by means of an articulation at one side, thus facilitating their being opened in order to surround the piping.

7. Device, according to claim 1, **characterized in that** the anti-traction segments (6) have teeth (6a) on the surface in contact with the piping (2).

8. Device, according to claim 1, **characterized in that** the anti-traction segments (6) are robust pieces made of a material which is harder than that of the piping, with which it comes into contact.

9. Device, according to claim 8, **characterized in that** the anti-traction segments (6) are made of a material which is twice as hard as the material of the pipes, with which they come into contact.

10. Device, according to claim 8 or 9, **characterized in that** the anti-traction segments (6) are robust pieces made of a material which is at least 55 Rockwell grades hard.

11. Device, according to claim 1, **characterized in that** the means (10) which facilitate the displacement of the anti-traction segments (6) are elastic and/or flexible elements.

12. Device, according to claim 1, **characterized in that** the anti-traction segments are wedge shaped.

13. Device, according to claim 1, **characterized in that** the anti-traction segments are rectangular prism shaped.
